# NEUE EUROPÄISCHE PATENTSCHRIFT

(11) **EP 2 213 177 B2**
(45) Veröffentlichungstag und Bekanntmachung des Hinweises auf die Entscheidung über den Einspruch: **28.10.2015**
(45) Hinweis auf die Patenterteilung: 21.12.2011
(21) Anmeldenummer: 09001166.9
(22) Anmeldetag: 28.01.2009
(51) Int. Cl.: A22C 11/10

(54) **Vorrichtung und Verfahren zum hüllenschonenden Abteilen von gefüllten Wurststrängen**
Device and method for separating filled sausage strands without damaging the casing
Dispositif et procédé de séparation préservant les enveloppes de chapelets de saucisses remplis

(43) Veröffentlichungstag der Anmeldung: 04.08.2010
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Flach, Juergen, 89611 Obermarchtal (DE); Braig, Wolfgang, 88471 Laupheim - Obersulmetingen (DE); Bochtler, Juergen, 88437 Aepfingen (DE); Merk, Jochen, 88400 Biberach (DE)
(74) Vertreter: Grünecker Patent- und Rechtsanwälte PartG mbB

(56) Entgegenhaltungen:
- EP-A- 0 472 825
- EP-A- 1 902 622
- WO-A1-94/07370
- DE-A1- 2 054 441
- DE-A1- 2 302 297
- GB-A- 2 076 629
- US-A- 4 104 763
- US-A- 6 050 888
- US-A- 6 050 888
- US-A1- 2003 228 837
- US-A1- 2005 221 743

## Beschreibung

Die Erfindung betrifft eine Vorrichtung zum hüllenschonenden Abteilen von gefüllten Wurststrängen nach dem Oberbegriff des Anspruchs 1 sowie ein entsprechendes Verfahren nach dem Oberbegriff des Anspruchs 15. Eine gattungsgemäße Vorrichtung bzw. ein gattungsgemäßes Verfahren sind aus DE-A-2 302 297 bekannt.

Bei der Wurstherstellung werden u.a. konstant füllende Systeme verwendet. Dabei wird der Füllgutausstoß beim Abteilvorgang nicht gestoppt, auch erfolgt ein gleichmäßiger Darmabzug vom Füllrohr. Das Abteilen des Strangs in einzelne Positionen erfolgt durch Einschnüren des gefüllten Wurststrangs mit Abteilelementen.

Eine solche Vorrichtung ist beispielsweise bereits aus der US 6,050,888 bekannt. Der kontinuierlich gefüllte Wurststrang wird hier mit Hilfe eines umlaufenden Transportelementes, z.B. einer Kette oder eines Zahnriemens abgeteilt. Hierfür sind auf dem Transportelement am Umfang in gleichen Abständen Abteilelemente und Führungselemente angebracht. Die Abteilelemente greifen paarweise in den gefüllten Wurststrang ein und schnüren diesen ab, so dass eine Portion erzeugt wird.

Um Würste mit unterschiedlichen Kalibern herzustellen wird, wenn der Freiraum zwischen der Wurst und den nicht einstellbaren Führungselementen zu groß oder zu klein wird, ein anderes Kettenpaar verwendet. Es hat sich gezeigt, dass sonst, insbesondere bei Naturdärmen in Folge starker mechanischer Belastungen sehr oft Darmplatzer auftreten. Ein hüllenschonendes Abteilen ist hier insbesondere für unterschiedliche Wurstkaliber nicht möglich.

Eine andere Möglichkeit zur Herstellung ist in der EP 0 472 825 beschrieben, wie in Fig. 14 gezeigt ist. Hier ist hinter einem flexiblen Paar von Abteilelementen ein Transportband vorgesehen. Die Abtransportbänder haben die Funktion die Würste zu klemmen und abzutransportieren, da die Abteilstelle zwischen den Abteilelementen und den Bändern erzeugt wird. Hier tritt das Problem auf, dass empfindliche Naturdärme in einem Bereich der Abteilelemente aufplatzen können. Nachteilig bei dieser Ausführung ist es auch, dass die zwei Systeme zum Herstellen von Produkten gleicher Länge hintereinander angeordnet sind. Dadurch kommt es vor allem bei der Verarbeitung von Naturdärmen (Kranzigkeit, Tendenz zum Ausweichen aus einer theoretisch vorgesehenen Füllachse) zu Übergabeproblemen von der ersten zur zweiten Einheit, nämlich aufgrund fehlender Führung (Unwucht).

Aus der EP 1 902 622 ist , wie in Fig. 15 gezeigt ist, auch bereits ein Abteilsystem für im Wesentlichen konstante Wurstkaliber bekannt..

Hiervon ausgehend liegt der vorliegenden Erfindung die Aufgabe zugrunde, eine Vorrichtung und ein Verfahren bereitzustellen, mit denen insbesondere Naturdärme sehr schonend abgeteilt und geführt werden können.

Erfindungsgemäß wird diese Aufgabe durch die Merkmale der Ansprüche 1 und 14 gelöst.

Gemäß der vorliegenden Erfindung kann der Abstand der Führungselemente zueinander an das Wurstkaliber angepasst werden. Unter Führungselement versteht man hier ein Element, das den Wurststrang im Wesentlichen auf der Längsachse der Vorrichtung in Transportrichtung hält und führt, so dass der noch nicht fertig befüllte Wurststrang sich zwischen den Führungen um seine Längsachse verdrehen kann. Durch die verstellbaren Führungselemente kann immer ein optimales Verhältnis von Wurstkaliber und Abstand der Führungselemente eingestellt werden. Bei zu kleinem Abstand der Führungselemente könnte sich die noch nicht vollständig gefüllte Wurst, die durch das Füllrohr in Rotation versetzt wird, nicht ungehindert mitdrehen, was zu Fehlabdrehstellen oder Darmplatzem führen würde. Bei zu großem Abstand würde der Darm aufgrund seiner Krümmung (Kranzigkeit) beim Abdrehen zu Unwuchterscheinungen neigen. Dabei könnte die Wurst an die Stützelemente anschlagen und ebenfalls platzen, oder es könnten durch das seitliche Ausweichen der Würste Längenschwankungen auftreten. Die vorliegende Erfindung ermöglicht also eine optimale Führung des Wurststrangs und somit eine darmschonende Produktion bei unterschiedlichen Wurstkalibern, insbesondere auch dann, wenn sich das Wurstkaliber und die Länge der Einzelportion ändern.

Die Führungselemente und Abteilelemente sind räumlich überlagert, d.h. nicht hintereinander angeordnet. Durch die räumliche Überlagerung ergibt sich der Vorteil, dass beim Abteilen bzw. Einschnüren des Wurststrangs mit Hilfe der Abteilelemente der Wurststrang gestützt werden kann. Somit kann eine darm- und produktschonende Herstellung erreicht werden. Durch die räumliche Überlagerung kann die Abteilvorrichtung sehr nah am Füllrohr angeordnet werden, so dass der Wurststrang bereits unmittelbar nach dem Ausstoß der pastösen Masse gestützt werden kann. Vorteilhafterweise ist der Abstand der Führungselemente derart einstellbar, dass er größer ist als das Wurstkaliber. Dies führt, wie zuvor erläutert dazu, dass die in Drehung versetzte, noch nicht ganz befüllte Wurst, die an ihrem Vorderende bereits eine Abdrehstelle aufweist und zum Füllrohr hin noch nicht abgeteilt ist, ungehindert mitdrehen kann und Unwuchten verhindert werden können. Der Abstand a von einem im Zentrum M der Führungselemente angeordneten Wurststrang zu den Führungselementen beträgt 0,5 bis 5 mm, vorzugsweise 0,5 bis 2 mm.

Vorteilhafterweise wird die Abteilstelle in einem Bereich zwischen den Führungselementen erzeugt. Dadurch, dass die Abteilstelle in dem Bereich zwischen den Führungselementen erzeugt wird, kann sichergestellt werden, dass während des Abteilens der Wurststrang gut geführt wird. Außerdem kann mit dieser Anordnung die Vorrichtung möglichst nahe an das Ausstoßende des Füllrohrs gebracht werden. Somit ist, wie bereits erwähnt, eine schonende Führung unmittelbar im Anschluss an das Füllrohr möglich.

Vorzugsweise sind die Führungselemente kaliberabhängig im Bereich von weniger als 10 mm von dem Ausstoßende des Füllrohrs beabstandet.

Gemäß einem bevorzugten Ausführungsbeispiel umfassen die mindestens zwei Führungselemente mindestens zwei gegenüberliegende sich in Transportrichtung erstreckende Führungsleisten, die vorzugsweise synchron zueinander in Richtung Zentrum M der Führungselemente verfahrbar sind. Hier sind die Führungselemente also feststehend und laufen nicht mit. Diese in Transportrichtung verlaufenden Führungsleisten können dann, je nach Wurstkaliber, eingestellt werden und ermöglichen so einen großen Kaliberbereich ohne das Wechseln von Formatteilen. Solche Führungselemente bzw. Führungsleisten sind unabhängig von den Abteilelementen, so dass dann auch unterschiedliche Längen produziert werden können.

Gemäß einer bevorzugten Ausführungsform weist die Vorrichtung mindestens zwei gegenüberliegende umlaufende Elemente, wie z.B. Riemen, Bänder oder Ketten, auf, die jeweils mindestens ein Abteilelement umfassen, wobei die Führungsleisten derart angeordnet sind, dass die Abteilelementpaare zwischen den Führungsleisten berührungslos in Transportrichtung T bewegbar sind. Diese Anordnung ist sehr platzsparend und ermöglicht, dass sich die Abteilelemente möglichst nahe entlang der Führungsleiste bewegen können, während der Strang eingeschnürt wird. Dadurch können die Führungsleisten so nahe wie möglich am Ende der Tülle positioniert werden. Das Produkt wird während des Abdrehvorgangs so früh wie möglich geführt, was wiederum eine darm- und produktschonende Herstellung mit sich bringt. Es können auch mehrere Führungsleisten, insbesondere vier Führungsleisten, um das Zentrum M angeordnet sein.

Gemäß einer weiteren Ausführungsform der vorliegenden Erfindung sind die Führungselemente nicht statisch, sondern mitlaufend ausgebildet. Wenn die Führungselemente mitlaufend ausgebildet sind und gleichzeitig angetrieben werden, können diese auch eine Transportfunktion für den gefüllten Wurststrang aufweisen. Dann muss in einem, in Transportrichtung betrachtet, vorderen Bereich der Führungselemente ,d.h. dessen Länge etwa mindestens der Länge einer herzustellenden Wurst ± 10% entspricht, der Abstand der Führungselemente so groß sein, dass sich der Wurststrang zwischen den Führungselementen frei drehen kann. Im weiteren Verlauf in Transportrichtung verkleinert sich der Abstand derart, dass die Würste geklemmt werden, um transportiert zu werden. Die gegenüberliegenden Führungselemente können dabei also z.B. entweder parallel zueinander verlaufen oder unter einen Winkel zueinander und somit konisch verstellbar sein. Die Führungselemente können jedoch auch frei mitlaufen, d. h. dass sie sich, z. B. in Form eines Bandes, einer Kette oder einer Trommel, frei um mindestens eine Achse mitdrehen, wenn der Wurststrang in Transportrichtung bewegt wird.

Vorteilhafterweise umfassen die Führungselemente Nocken, insbesondere V- oder U-förmige Nocken, die auf zwei gegenüberliegenden umlaufenden Teilen, insbesondere Riemen, Bändern oder Ketten angeordnet sind. Die umlaufenden Teile sind dabei übereinander angeordnet, können jedoch auch horizontal angeordnet sein. Die Nocken stützen so den gefüllten Wurststrang in zuverlässiger Art und Weise.

Vorteilhafterweise sind die Abteilelemente dann im, in Transportrichtung T betrachteten, vorderen Endbereich der Führungselemente angeordnet. Unter vorderem Endbereich versteht man hier den Bereich, der möglichst nahe am Füllrohr angeordnet ist.

Die Nocken können zumindest teilweise flexibel ausgebildet sein. Das heißt, dass die Nocken ganz aus flexiblem Material oder aber zumindest an ihrem oberen, d.h. dem umlaufenden Teil zugewandten Ende so flexibel ausgebildet sind, dass sie bei Kollision mit einem Abteilelement ausweichen können. Somit ist eine Längenflexibilität der verschiedenen Produkte gegeben. Die Flexibilität bezüglich der Länge der Produkte ist somit unabhängig vom Abstand der Nocken auf dem umlaufenden Teil und auch unabhängig vom Zeitpunkt des Eingriffs der Abteilelemente zwischen den Nocken.

Um einen möglichst großen Wurstkaliberbereich abzudecken sind die Nocken auf gegenüberliegenden umlaufenden Teilen in Transportrichtung versetzt zueinander angeordnet. Das bedeutet, dass die beiden umlaufenden Teile sehr nahe zusammengebracht werden können und auf ein sehr kleines Wurstkaliber eingestellt werden können, das kleiner als die Summe der Höhen der gegenüberliegenden Nocken ist.

Vorteilhafterweise schneiden sich die Bewegungsbahn der Führungselemente und die Bewegungsbahn der Abteilelemente in diesem Ausführungsbeispiel.

Die vorliegende Erfindung wird nachfolgend unter Bezugnahme der folgenden Figuren näher erläutert.
- Fig. 1: zeigt schematisch einen Längsschnitt durch eine Vorrichtung gemäß der vorlie- genden Erfindung,
- Fig. 2: zeigt schematisch in perspektivischer Darstellung ein erstes Ausführungsbeispiel der vorliegenden Erfindung,
- Fig. 3: zeigt in schematischer Darstellung eine Vorderansicht der in Fig. 2 gezeigten Vorrichtung,
- Fig. 4A: zeigt einen Ausschnitt einer Vorderansicht des ersten Ausführungsbeispiels für ein erstes Wurstkaliber dk,
- Fig. 4B: zeigt einen entsprechenden Ausschnitt einer Vorderansicht des ersten Ausfüh- rungsbeispiels für ein zweites Wurstkaliber dk,
- Fig. 5: zeigt eine Draufsicht des ersten Ausführungsbeispiels der vorliegenden Erfin- dung,
- Fig. 6: zeigt eine perspektivische Teilansicht eines zweiten Ausführungsbeispiels ge- mäß der vorliegenden Erfindung,
- Fig. 7: zeigt eine Ansicht auf die Nocken und die Abteilelemente aus der Richtung A des in Fig. 6 gezeigten Ausführungsbeispiels,
- Fig. 8: zeigt in schematischer Darstellung zwei gegenüberliegende Stützelemente mit einem zentrisch angeordneten Wurststrang,
- Fig. 9: zeigt eine perspektivische Teilansicht des zweiten Ausführungsbeispiels und diametral einschnürende, parallel mitlaufende Abteilelemente,
- Fig. 10: zeigt eine perspektivische Teilansicht des zweiten Ausführungsbeispiels mit ro- tierend einschnürenden Abteilelementen,
- Fig. 11: zeigt eine Seitenansicht des zweiten Ausführungsbeispiels,
- Fig. 12: zeigt den Ausschnitt einer Seitenansicht eines weiteren Ausführungsbeispiels mit flexiblen Nocken,
- Fig. 13: zeigt eine Teilseitenansicht gemäß einer weiteren Ausführungsform mit zueinan- der versetzten Nocken,

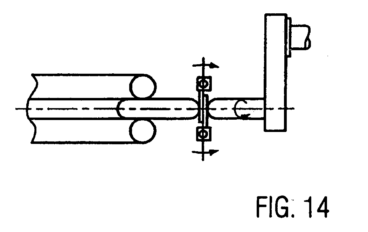

- Fig. 14: zeigt grob schematisch eine Vorrichtung zum Abteilen eines gefüllten Wurst- strangs gemäß dem Stand der Technik,
- Fig. 15: zeigt in perspektivischer Darstellung eine Vorrichtung zum Abteilen eines Wurst- strangs gemäß dem Stand der Technik.

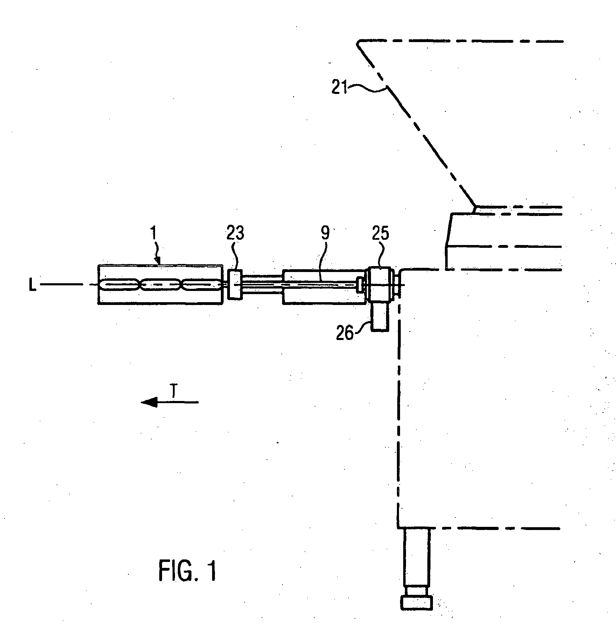

Fig. 1 zeigt in schematischer Darstellung eine Füllmaschine zum Erzeugen eines gefüllten Wurststrangs 12, der mit Hilfe der erfindungsgemäßen Vorrichtung 1 in einzelne Wurststrangabschnitte mit einer vorbestimmten Länge I und einem bestimmten Wurstkaliber dk unterteilt wird. Die Füllmaschine weist in bekannter Weise einen Einfülltrichter 21 auf, über den pastöse Masse, beispielsweise Wurstbrät, eingefüllt wird und dann über ein nicht dargestelltes Förderwerk in ein Füllrohr 9 geschoben wird. Am Füllrohrende befindet sich die Darmbremse 23. Zum Abdrehen des gefüllten Wurststrangs ist hier ein Abdrehgetriebe 25 vorgesehen, das über den Motor 26 angetrieben wird. Über das Abdrehgetriebe kann das Füllrohr 9 zusammen mit der darauf aufgezogenen Hülle um die Längsachse L gedreht werden. Hier ist die Längsachse L eine Verlängerung der Füllachse.

Über das Füllrohr 9 wird die pastöse Masse in die, auf dem Füllrohr 9 aufgezogene und durch die Darmbremse 13 gehaltene Hülle, z.B. den Naturdarm, ausgestoßen, wodurch der gefüllte Wurststrang 12 in bekannter Art und Weise erzeugt wird.

Unmittelbar hinter dem Füllrohr 9 befindet sich die Vorrichtung 1 zum Abteilen des gefüllten Wurststrangs, die in Fig. 1 nur schematisch dargestellt ist. Der Wurststrang soll durch die Vorrichtung 1 in Einzelportionen vorbestimmter Länge I unterteilt werden.

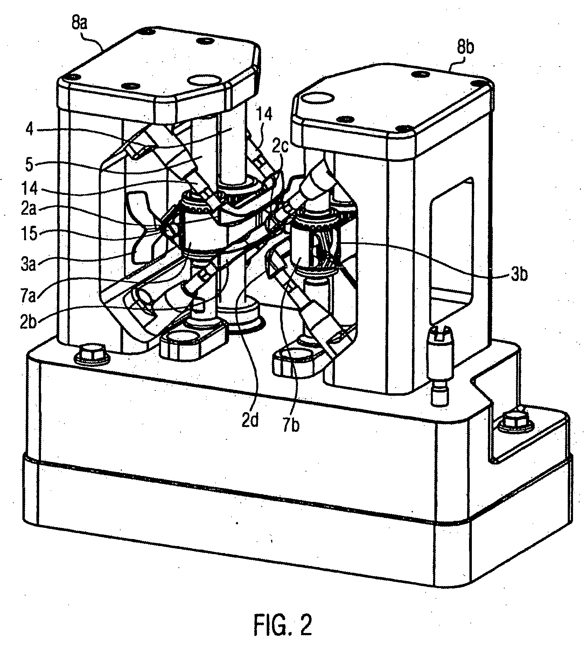

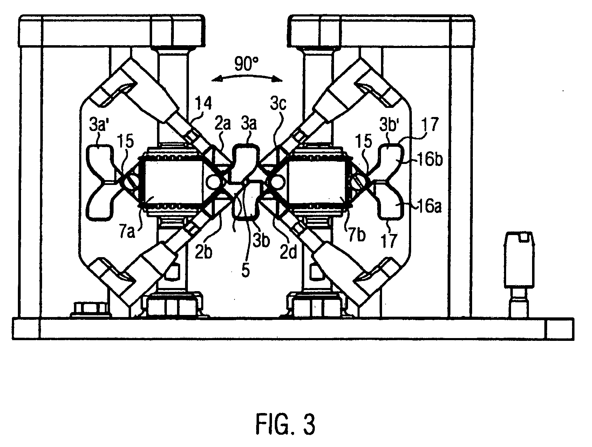

Fig. 2 - 5 zeigen ein erstes Ausführungsbeispiel einer solchen Vorrichtung 1 zum hüllenschonenden Abteilen der gefüllten Wurststränge 12 in Einzelportionen. Dieses Ausführungsbeispiel weist, wie auch insbesondere aus Fig. 3 deutlich wird, Führungselemente auf, die aus z.B. vier Führungsleisten 2a, b, c, d gebildet sind. Die Führungsleisten 2a, b, c, d erstrecken sich in Transportrichtung T parallel zur Längsachse L. Die Führungsflächen der Führungsleisten sind zum Wurststrang, d. h. zum Zentrum M der Führungsleisten, das hier auf der Längsachse L der Vorrichtung liegt, hingewandt. Die vier statisch angeordneten Führungsleisten 2a, b, c, d sind unter einem Winkel von etwa 90° zueinander angeordnet, wobei jeweils zwei gegenüberliegende Führungsleisten 2a und 2b sowie 2c und 2d seitlich links und rechts von der Längsachse L angeordnet sind. Die Führungsleisten sind an ihren Enden abgerundet, um Verletzungen des gefüllten Wurststrangs zu verhindern. Die Führungsleisten sind über entsprechende Halterungen 14 an einem jeweiligen Gehäuse 8a , 8b befestigt.

Weiter umfasst die Vorrichtung mindestens zwei gegenüberliegende umlaufende Elemente 7a, b, die seitlich symmetrisch zur Längsachse L angeordnet sind. Die umlaufenden Elemente 7a, b sind beispielsweise als Riemen, Bänder oder Ketten ausgebildet. Das umlaufende Element wird von einer Antriebswelle 4 angetrieben und läuft um eine Umlenkwelle 5. Die umlaufenden Elemente weisen jeweils mindestens ein Abteilelement 3a, b, in diesem Ausführungsbeispiel je zwei Abteilelemente auf, wobei die Abteilelemente 3a, b der gegenüberliegenden umlaufenden Teile 7a, b jeweils zusammen ein Abteilelementpaar bilden, das den gefüllten Wurststrang einschnürt. Wie insbesondere aus Fig. 3 hervorgeht, können die Abteilelemente 3a, b ineinander eingreifen und sich dann mit dem Wurststrang in Transportrichtung T mit synchroner Geschwindigkeit zur Füllgutausstoßgeschwindigkeit, unabhängig von den Führungselementen, bewegen und am hinteren Ende der Vorrichtung aus dem abgeteilten Wurststrang herausschwenken.

Die beiden Flügel 16a, b eines Abteilelementes 3 liegen, wie insbesondere aus Fig. 3 hervorgeht, nicht in einer Ebene, sondern verlaufen zunächst unter einem bestimmten Winkel auseinander. Die Endbereiche 17 der Flügel 16a, b sind dann derart gebogen, dass sie in einer Ebene liegen. Die beiden Abteilelemente sind derart angeordnet, dass sie, wie aus Fig. 3 hervorgeht, wenn sie über die umlaufenden Elemente 7a, b aufeinander zu bewegt werden, ineinandergreifen. Die Abteilelemente können jedoch auch so ausgebildet sein, dass sie nebeneinander vorbeigleiten und den Wurststrang so einschnüren.

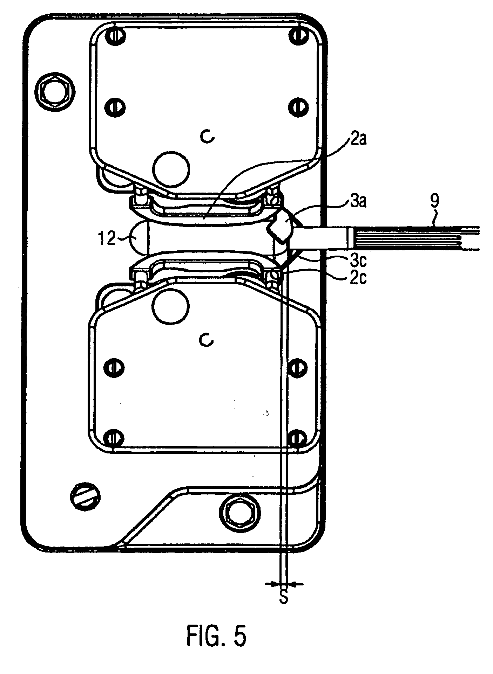

Die Abteilelemente erstrecken sich hier zwischen den gegenüberliegenden bzw. übereinanderliegenden Führungsleisten 2a, b, c, d hindurch. Die Abteilelemente sind dabei im Wesentlichen Y-förmig ausgebildet, so dass der schmale Bereich 15 auch zwischen Führungsleisten 2a, b hindurchlaufen kann, die sehr nahe zueinander angeordnet sind. Das heißt, dass die Führungsleisten 2a, b, c, d geometrisch so gestaltet sind, dass sich die Abteilelemente möglichst nahe entlang der Führungsleisten berührungslos bewegen können, während sie den Wurststrang einschnüren. Dadurch können die Führungsleisten 2a, b, c, d so nahe wie möglich am Ende des Füllrohrs positioniert werden. Dadurch wird das Produkt während des Abdrehvorgangs so früh wie möglich eingeschnürt und geführt und eine darm- bzw. produktschonende Herstellung wird erreicht. Dabei liegt die Abteilstelle in einem Bereich zwischen den Führungselementen 2a, b, c, d wie insbesondere aus Fig. 5 hervorgeht. Der Abstand s von den Führungselementen bis zum Füllrohr 9 ist sehr klein und liegt kaliberabhängig in einem Bereich von weniger als 10 mm.

Um ein schonendes Abteilen insbesondere von Naturdärmen zu gewährleisten, kann der Abstand der Führungselemente zueinander in Abhängigkeit des Wurstkalibers dk eingestellt werden. Dazu können die Führungsleisten linear auf einer Achse in Richtung Zentrum der Führungsleisten M, das auf der Längsachse L liegt, verfahren werden. Bei dieser Ausführungsform weist eine Führungsleiste 2a, b, c, d mindestens eine , vorzugsweise zwei Halterungen 14 auf. Die jeweilige Halterung 14 kann über einen nicht dargestellten Antrieb linear verfahren werden. Vorzugsweise verfahren die Führungsleisten synchron, um eine exakte Positionierung des Wurststrangs zu gewährleisten.

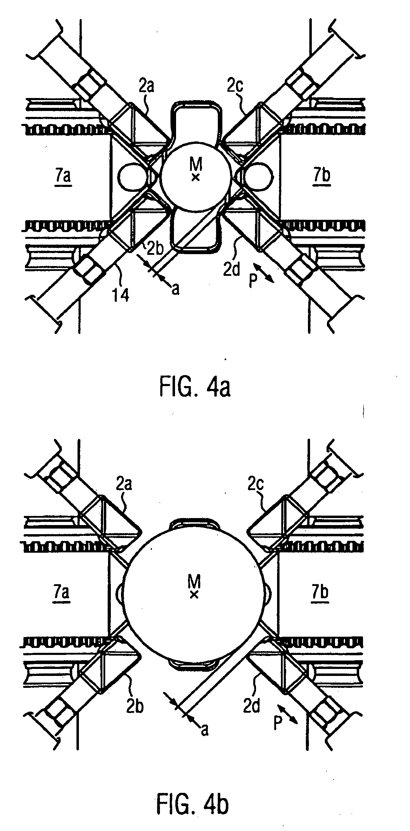

Aus Fig. 4A wird deutlich, dass die Halterungen 14 für die Führungsleisten entlang des Pfeiles P verfahren können. Fig. 4A zeigt eine erste Position der Führungsleisten für ein relativ kleines Wurstkaliber dk. Dazu werden die Führungsleisten derart verfahren, dass der Abstand a von einem, im Zentrum M der Führungselemente angeordneten Wurststrangs, zu den Führungselementen in einen Bereich von 0,5 bis 5 mm, vorzugsweise in einem Bereich von 0,5 bis 2 mm liegt. Bei zu kleinem Abstand a kann sich die noch nicht vollständig gefüllte Wurst, die durch das Füllrohr 9 in Rotation versetzt wird, nicht ungehindert mitdrehen, was zu Fehlabdrehstellen oder Darmplatzem führt. Bei zu großem Abstand a neigt der Darm aufgrund seiner Krümmung (Kranzigkeit) beim Abdrehen zu Unwuchterscheinungen. Dabei kann die Wurst an die Führungselemente anschlagen und ebenfalls platzen, oder es können durch das seitliche Ausweichen der Würste Längenschwankungen auftreten. Durch die einstellbaren Führungsleisten kann ein sehr großer Kaliberbereich abgedeckt werden. Ein Austausch von Formatteilen ist hier nicht notwendig.

Fig. 4B zeigt eine Vorderansicht für ein größeres Wurstkaliber. Hier wurden die Führungsleisten 2a, b, c, d vom Zentrum M nach außen bewegt, damit der Abschnitt a, wie zuvor beschrieben, in dem erfindungsgemäßen Bereich liegt.

Somit kann eine sichere und schonende Führung bei unterschiedlichen Kalibern sichergestellt werden.

Bei diesem Ausführungsbeispiel sind die Führungselemente bevorzugt parallel zueinander ausgerichtet. Die Würste werden durch die Führungselemente nicht geklemmt.

Im Anschluss an die oben beschriebene Ausführung ist eine Transporteinheit, z.B. ein Abtransportband zur weiteren Verarbeitung des Produkts angeordnet.

Bei dem in Fig. 2 bis 5 gezeigten Ausführungsbeispiel weist die Vorrichtung ein umlaufendes Element 7a, b auf, an dem jeweils mindestens ein Abteilelement befestigt ist. Möchte man nun die Länge einer zu produzierenden Wurst ändern, so muss man die Dauer verändern, in der kein Abteilelement im Wurststrang im Eingriff ist.

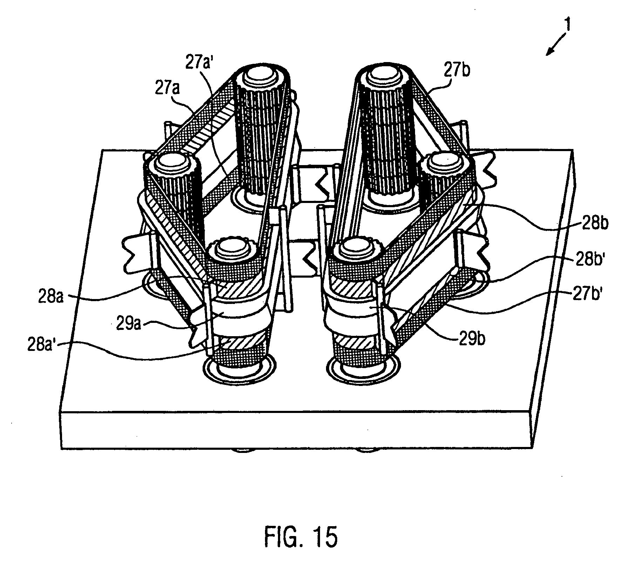

Das in den Fig. 1 bis 5 gezeigte Ausführungsbeispiel ist jedoch auch anwendbar für ein Prinzip, bei dem, wie in Fig. 15 gezeigt ist, mehrere gegenüberliegend angeordnete, unabhängig voneinander antreibbare, umlaufende Elementpaare mit jeweils mindestens einem entsprechenden Abteilelementpaar vorgesehen sind. In Fig. 15 gibt es beispielsweise drei Elementpaare, 27 a,b sowie 28 a,b und 29 a,b. Hier bestehen die Elementpaare 27 und 28 aus den beabstandeten Unterelementepaaren 27 a,a',b,b' und 28 a,a',b,b' die voneinander beabstandet sind, aber gleich angetrieben werden. Dadurch, dass die Geschwindigkeit der verschiedenen umlaufenden Elementpaare 27, 28, 29 unabhängig voneinander eingestellt werden kann, kann durch Änderung der Geschwindigkeit der Abstand zwischen aufeinanderfolgende Abteilelementpaare bzw. Abteilstellen genau eingestellt werden, so dass eine bestimmte Länge I des abgeteilten Wurststrangs eingestellt werden kann. Somit ist es möglich, ohne Modifikation mechanischer Teile und ohne komplettes Umrüsten unterschiedliche Produktlängen herzustellen. Die Länge des abgeteilten Wurststrangs ist hier nicht abhängig von der Länge bzw. dem Umfang des umlaufenden Elementes. Die Funktion und der Aufbau dieser Lösung ist explizit in der EP 1 902 622 beschrieben auf die hier Bezug genommen wird. Die in Fig. 15 gezeigten umlaufenden Elemente ersetzen bei dieser Ausführungsform dann die umlaufenden Elemente 7a, b, wie sie beispielsweise in den Fig. 1 bis 5 gezeigt sind.

Die in Fig. 1 bis 5 gezeigte Vorrichtung arbeitet wie folgt:

Der Abstand der Führungselemente 2 a,b,c,d wird dem Wurstkaliber dk angepasst. Wie zuvor beschrieben wird durch die in Fig. 1 gezeigte Füllmaschine ein gefüllter Wurststrang 12 erzeugt. Der Wurststrang erreicht unmittelbar hinter dem Füllrohrende des Füllrohrs 9 die Abteilvorrichtung 1. Die umlaufenden Abteilelemente 3a, b werden aufeinander zu bewegt. Beim Eingreifen der Abteilelemente 3a, b wird an dieser Stelle die pastöse Masse im Wurststrang verdrängt, so dass es zu einer Abteilstelle kommt. Dabei können die Abteilelemente 3a, b ineinandergreifen, wie zuvor beschrieben, oder aber auch nebeneinander vorbeigleiten und den Wurststrang einschnüren, wie allgemein bekannt ist.

Beim Eingreifen in den Wurststrang werden die umlaufenden Teile 7a, b über die Antriebswelle 4 synchron zum Füllgutausstoß, d.h. der Ausstoßgeschwindigkeit der pastösen Masse aus dem Füllrohr, bzw. zur Fördergeschwindigkeit des gefüllten Wurststrangs 12 angetrieben. Der gefüllte Wurststrang wird durch die Bewegung der eingreifenden Abteilelemente 3a, b weiter in Transportrichtung T gefördert. Durch das Füllrohr wird die noch nicht vollständig befüllte Wurst in Rotation versetzt, so dass an der Abteilstelle die Abdrehstelle einspringt. Aufgrund der idealen Einstellung des Abstands der Führungselemente 2a, b, c, d kann sich die noch nicht vollständig befüllte Wurst in der Führung ungehindert mitdrehen.

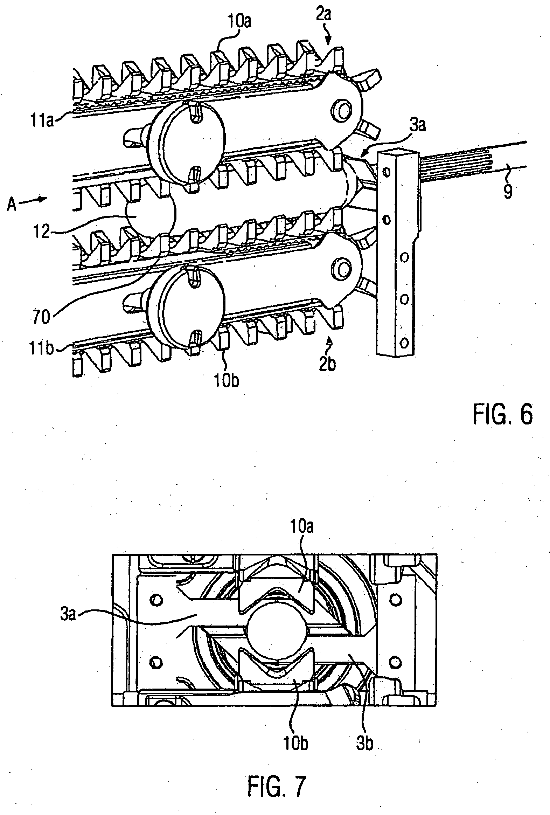

Fig. 6 bis 13 zeigen ein weiteres Ausführungsbeispiel gemäß der vorliegenden Erfindung. Auch bei dieser Ausführungsform sind die Abteilelemente 3a, b räumlich mit den Führungselementen 10a überlagert. Wie auch in der vorherigen Ausführung sind die Führungselemente 2a, b unabhängig von den Abteilelementen 3a, b auf das Wurstkaliber dk einstellbar. Die Führungselemente umfassen hier wieder umlaufende Teile 11a,b, wie insbesondere zwei umlaufende Bänder, Ketten, Riemen etc., die z.B. um zwei Achsen umlaufen und auf deren Oberfläche in regelmäßigen Abständen Nocken, insbesondere U- oder V-förmige Nocken angeordnet sind.

Im Gegensatz zur vorherigen Ausführungsform sind die Führungselemente 2a, b nicht statisch, sondern mitlaufend. Die Nocken 10a, b der übereinander angeordneten Führungselemente 2a, b umschließen, wie aus Fig. 7 hervorgeht, zumindest teilweise den gefüllten Wurststrang 12. Der Abstand der Führungselemente 2a, 2b ist über eine nicht dargestellte Verstelleinrichtung einstellbar. Die vertikale Position der Führungselemente kann unabhängig voneinander mit Hilfe einer entsprechenden Verstelleinrichtung eingestellt und fixiert werden. Zur besseren Einstellung unter Beibehaltung der Mittelachse L kann die Verstelleinrichtung für die beiden Führungselemente gekoppelt sein, beispielsweise durch eine Spindel mit Rechts- und Linksgewinde oder ein ineinandergreifendes Zahnradpaar, wobei an jedem dieser Zahnräder ein Führungselement befestigt ist.

Wie insbesondere aus den Fig. 6 bis 11 hervorgeht ist im, in Transportrichtung T betrachteten, vorderen Endbereich 13 eine Abteileinrichtung mit einem Abteilelementepaar 3a, b vorgesehen. Unter dem vorderen Endbereich der Führungselemente versteht man den Bereich, der sich möglichst nah am Füllrohr befindet. Dadurch, dass die Abteilelemente zwischen den Führungselementen liegen, und zwischen den Nocken 10 in den Wurststrang eingreifen, kann die Vorrichtung möglichst nahe an das Füllrohrende gesetzt werden, was wiederum wie zuvor im Zusammenhang mit dem ersten Ausführungsbeispiel erläutert, eine besonders schonende Verarbeitung ermöglicht.

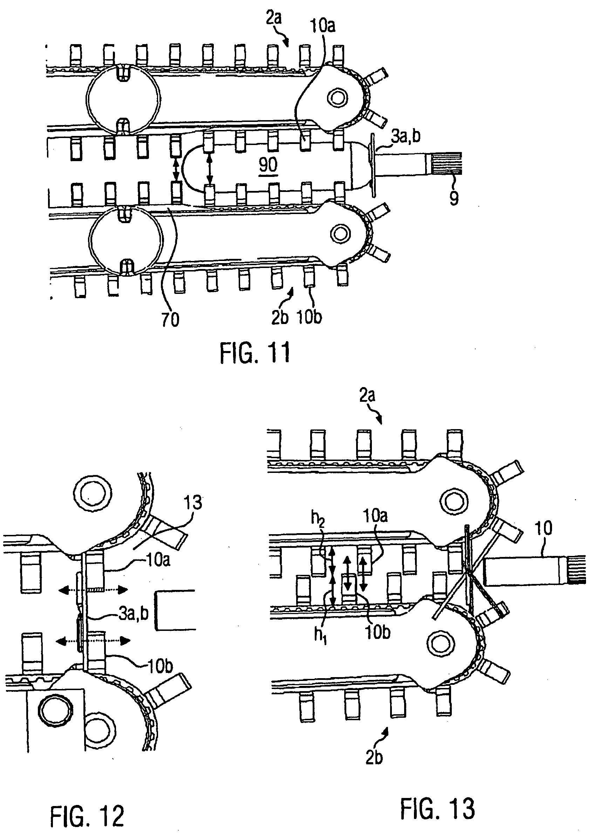

Auch hier liegt, wie zuvor erläutert, das Abteilelement so dicht am Füllrohr, dass die Abteilelemente das Füllrohr gerade nicht berühren, wie insbesondere aus Fig. 11 hervorgeht.

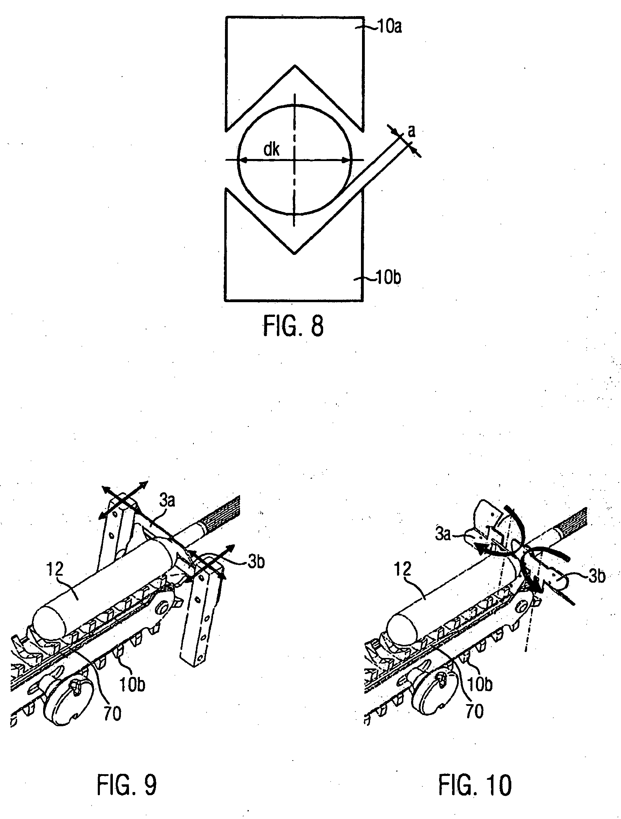

Als Abteilelemente 3a, b können Abteilelemente vorgesehen sein, die das Wurstkaliber diametral einschnüren, wobei während des Abteilvorgangs die Abteilelemente 3a, b von einem Ausgangspunkt aus ein Stück parallel zum Wurststrang in Transportrichtung mitlaufen, dabei den Wurststrang einschnüren, sich aus dem Wurststrang zurückziehen und auf einer geschlossenen Bahn wieder zum Ausgangspunkt zurückzulaufen, um die nächste Abteilstelle zu erzeugen. (Fig. 9)

Die Abteilelemente können dabei wie zuvor beschrieben ineinandergreifen oder aber auch aneinander vorbeigleiten. Wie aus Fig. 10 hervorgeht, können die Abteilelemente 3a, b auch zwischen den Nocken 10a, b des umlaufenden Teils 11 den Wurststrang einschnüren, indem die Abteilelemente um eine vertikale Achse rotieren und an der Abteilstelle ineinandergreifen oder aneinander vorbeigleiten, um so den Strang einzuschnüren.

Wie zuvor beschrieben, kann durch Verstellen der Position der Führungselemente 2a, b zueinander der Abstand der Führungselemente 2a,2b, hier der Nocken 10a, b, wie insbesondere aus Fig. 8 hervorgeht, so eingestellt werden, dass der Abstand a von einem im Zentrum M der Führungselemente angeordneten Wurststrang zu den Führungselementen in einem Bereich von 0,5 bis 5 mm, vorzugsweise 0,5 bis 2 mm liegt, wie zuvor im Zusammenhang mit dem ersten Ausführungsbeispiel erläutert wurde.

Wenn die Führungselemente 2a,b hier auch eine Mitnahme bzw. Transportfunktion aufweisen sollen, haben diese, in Transportrichtung T betrachtet, in einem vorderen Bereich, dessen Länge etwa mindestens der Länge einer herzustellenden Wurst ± 10% entspricht, einen Abstand zueinander, derart, dass der Wurststrang sich frei zwischen den Führungselementen mitdrehen kann, wobei der Abstand dahinter derart abnimmt, dass die Würste geklemmt und in Transprtrichtung T gefördert werden können. Um dies zu bewerkstelligen können die Führungselemente beispielsweise nicht parallel zueinander angeordnet sein, sondern unter einem Winkel zueinander verlaufen, also konisch verstellbar sein.

Es ist jedoch auch möglich, wie insbesondere aus den Fig. 9, 10, 11 hervorgeht, dass die umlaufenden Teile 11 a,b, hier Bänder, Ketten oder Riemen, in einem Bereich hinter den Abteilelementen 3a,b über eine Erhöhung 70 laufen, so dass der Abstand der Nocken zueinander verringert wird und die Würste geklemmt werden. Um die Länge des vorderen Bereichs, in dem sich die herzustellenden Würste frei drehen können, an unterschiedliche Wurstlängen anzupassen, kann als Erhöhung ein axial beweglicher Gleitschuh verwendet werden.

Sind die Führunselemente 2a,b nicht angetrieben, laufen die umlaufenden Teile einfach mit den Würsten mit. Dann ist jedoch hinter der Vorrichtung 1 eine Transporteinrichtung vorgesehen, die die Würste in Transportrichtung T fördert.

Die Länge der unterschiedlichen Wurstportionen kann eingestellt werden über die Geschwindigkeit des Füllgutausstoßes und die Geschwindigkeit der dazu synchron angetriebenen umlaufenden Teile 2a, b, sowie der Einschnürfrequenz der Abteilelemente 3a, b. Die Flexibilität bezüglich der Länge der Produkte ist somit unabhängig vom Abstand der V- bzw. U-förmigen Nocken 10a, b auf dem Band. Um eine Längenflexibilität der verschiedenen Produkte zu erreichen, sind die Nocken 10a, b zumindest teilweise flexibel ausgebildet. Das heißt, dass die Nocken 10a, b aus einem flexiblen elastischen Material gebildet sind, oder aber zumindest ein oberer Bereich, der dem umlaufenden Element 11a, b zugewandt ist, aus einem beweglichen, flexiblen Teil gebildet ist. So kann ein Nocken 10a, b, wie aus Fig. 12 erkennbar ist, der mit einem Abteilelement 3a, b kollidiert, ausweichen.

Um den Wurstkaliberbereich noch weiter zu vergrößern ist es vorteilhaft, wenn die Nocken 10a, b auf den gegenüberliegenden umlaufenden Teilen 11a, b in Transportrichtung versetzt zueinander angeordnet sind, wie deutlich aus Fig. 13 hervorgeht. Somit kann der Abstand zwischen den Oberflächen der umlaufenden Teile 11 a, b der Führungselemente 2a, b auf einen Abstand verkleinert werden, der kleiner als die Höhe h₁ + h₂ der gegenüberliegenden Nocken ist. Somit kann der einstellbare Wurstkaliberbereich deutlich erhöht werden.

Das erfindungsgemäße Verfahren mit der Vorrichtung gemäß der zweiten Ausführungsform arbeitet wie folgt: Der Abstand der Führungselemente 2 a, b wird dem Wurstkaliber dk angepasst. Auch die axiale Position der Erhöhung 70 wird, wenn nötig, an eine bestimmte Wurstlänge angepasst. Zunächst wird, wie im Zusammenhang mit dem ersten Ausführungsbeispiel erläutert, der Wurststrang 12 von der Füllmaschine, wie sie in Fig. 1 gezeigt ist, erzeugt und in Transportrichtung T befördert. Die umlaufenden Teile 11a, b werden über einen nicht gezeigten Antrieb vorzugsweise synchron zur Ausstoßgeschwindigkeit des Füllguts angetrieben. Die Bewegungsbahn der Führungselemente, d.h. der Nocken 10a, b und die Bewegungsbahn der Abteilelemente schneiden sich hier, d.h., dass die Abteilelemente zwischen den Führungselementen angeordnet sind, was ermöglicht, dass die Vorrichtung sehr nahe am Füllrohr positioniert werden kann und gleichzeitig während des Abteilvorgangs die gefüllte Wursthülle gut gehalten werden kann. Der gefüllte Wurststrang wird also durch die Bewegung der eingreifenden Abteilelemente 3a, 3b eingeschnürt, wobei auch hier, wie zuvor erläutert, an der Abteilstelle eine Eindrehstelle einspringen kann. Die abgeteilte Wurst wird dann weiter in Transportrichtung T für die weitere Verarbeitung abtransportiert, wobei in dieser Ausführungsform vorzugsweise im weiteren Verlauf der Führungselemente 2a, b der Abstand der Nocken 10 a, b für eine bessere Mitnahme der abgeteilten Würste verringert wird. Dabei muss in einem, in Transportrichtung T betrachtet, vorderen Bereich, d.h. in einem Bereich 90 ,dessen Länge etwa mindestens der Länge einer herzustellenden Wurst ± 10% entspricht, der Abstand der Führungselemente so groß sein, dass sich der Wurststrang zwischen den Führungselementen frei drehen kann und der zuvor definierte Abstand a zwischen Wurststrang und Führung gegeben ist. Im weiteren Verlauf in Transportrichtung verkleinert sich der Abstand allmählich derart, dass die Würste geklemmt werden, um transportiert zu werden. Der Füllgutausstoß erfolgt ebenso wie bei der ersten Ausführungsform kontinuierlich.

Mit den zuvor gezeigten Ausführungsbeispielen ergibt sich eine optimal ausgestaltete Führung des Wurststrangs zur darmschonenden Produktion von Einzelwürsten, wobei die Führung auf das Wurstkaliber einstellbar ist. Dadurch, dass sich die Abteilelemente 3a, b und die Führungselemente 2a, b, c, d räumlich überlagern, d.h. dass der Abteilpunkt zwischen den Führungselementen liegt, kann die Führung der Würste so nah wie möglich am Ende des Füllrohres 9 beginnen. Dabei ist eine große Flexibilität hinsichtlich der Produktion von verschiedenen Wurstkalibern und auch unterschiedlich langen Würsten gegeben. Die Bewegung der Abteilelemente ist unabhängig von etwaigen Führungselementen.

## Patentansprüche

1. Vorrichtung (1) zum hüllenschonenden Abteilen von gefüllten Wurststrängen (12) mit mindestens einem Abteilelementpaar (3a, b) zum Abteilen des gefüllten Wurststrangs (12) und mit mindestens zwei Führungselementen (2a, b, c, d), zwischen denen der gefüllte Wurststrang (12) in Transportrichtung (T) gefördert wird, sodass der Abstand der Führungselemente (2a, b, c, d) zueinander in Abhängigkeit des Wurstkalibers (dk) einstellbar ist, wobei die Führungselemente (2a, b, c, d) und die Abteilelemente (3a, b) räumlich überlagert angeordnet sind,
**dadurch gekennzeichnet, dass**
die Bewegung der Abteilelemente (3a, b) unabhängig von den Führungselementen (2a, b, c, d) ist.

2. Vorrichtung nach Anspruch 1, **dadurch gekennzeichnet, dass** der Abstand der Führungselemente (2a, b, c, d) derart einstellbar ist, dass er größer ist als das Wurstkaliber (dk) und insbesondere der Abstand a von einem im Zentrum (M) der Führungselemente angeordneten Wurststrang (12) zu den Führungselementen (2a, b, c, d) in einem Bereich von 0,5 bis 5 mm, vorzugsweise in einem Bereich von 0,5 bis 2 mm, liegt.

3. Vorrichtung nach mindestens einem der Ansprüche 1 bis 2, **dadurch gekennzeichnet, dass** die Abteilstelle in einem Bereich zwischen den Führungselementen (2a, b, c, d) erzeugt wird.

4. Vorrichtung nach mindestens einem der Ansprüche 1 bis 3, **dadurch gekennzeichnet, dass** die Führungselemente (2a, b, c, d) einen möglichst geringen Abstand vom Ausstoßende des Füllrohres (9) aufweisen, derart, dass die Abteilelemente das Füllrohr gerade nicht berühren..

5. Vorrichtung nach mindestens einem der Ansprüche 1 bis 4, **dadurch gekennzeichnet, dass** die mindestens zwei Führungselemente zumindest zwei gegenüberliegende, sich in Transportrichtung (T) erstreckende Führungsleisten (2a, b, c, d) umfassen, die vorzugsweise synchron in Richtung Zentrum (M) der Führungselemente verfahrbar sind.

6. Vorrichtung nach mindestens Anspruch 5, **dadurch gekennzeichnet, dass** die Vorrichtung (1) mindestens zwei gegenüberliegende umlaufende Elemente (7a, b) umfasst, die jeweils mindestens ein Abteilelement (3a, b) umfassen, wobei die Führungsleisten (2a, b, c, d) derart angeordnet sind, dass die Abteilelemente (3a, b) zwischen den Führungsleisten (2a, b, c, d) berührungslos in Transportrichtung (T) bewegbar sind.

7. Vorrichtung nach mindestens einem der Ansprüche 1 bis 4, **dadurch gekennzeichnet, dass** die Führungselemente (2a, b) in Transportrichtung (T) mitlaufend ausgebildet sind.

8. Vorrichtung nach Anspruch 7, **dadurch gekennzeichnet, dass** die Führungselemente (2a, b) Nocken (10a, b), insbesondere V- oder U-förmige Nocken (10a, b) umfassen, die auf zwei gegenüberliegenden umlaufenden Teilen (11 a, b), insbesondere Riemen, Bändern oder Ketten, angeordnet sind.

9. Vorrichtung nach Anspruch 7 oder 8, **dadurch gekennzeichnet, dass** die Abteilelemente (3a, b) im, in Transportrichtung (T) betrachtet, vorderen Endbereich der Führungselemente (2a, b) zwischen den Führungselementen liegen.

10. Vorrichtung nach mindestens einem der Ansprüche 7 bis 9, **dadurch gekennzeichnet, dass** die Nocken (10a, b) zumindest teilweise flexibel ausgebildet sind.

11. Vorrichtung nach mindestens einem der Ansprüche 7 bis 10, **dadurch gekennzeichnet, dass** die Nocken auf den gegenüberliegenden umlaufenden Teilen (11a, b) in Transportrichtung (T) versetzt zueinander angeordnet sind.

12. Vorrichtung nach mindestens einem der Ansprüche 7 bis 11, **dadurch gekennzeichnet, dass** sich die Bewegungsbahn der Führungselemente (2a, b) und die Bewegungsbahn der Abteilelemente (3a, b) schneiden.

13. Vorrichtung nach mindestens einem der Ansprüche 7-12, **dadurch gekennzeichnet, dass** die gegenüberliegenden Führungselemente (2a,b), in Transportrichtung betrachtet, in einem vorderen Bereich einen Abstand zueinander aufweisen, derart dass der Wurststrang sich frei zwischen den Führungselementen mitdrehen kann, wobei der Abstand dahinter derart abnimmt, dass die Würste geklemmt und in Transportrichtung T gefördert werden.

14. Verfahren zum Abteilen von gefüllten Wurststrängen (12), bei dem der Wurststrang (12) über ein Füllrohr (9) gefüllt, dann über Abteilelemente (3a, b) abgeteilt und dabei von mindestens zwei Führungselementen (2a, b) geführt und durch Drehen des Füllrohres (9) um seine Längsachse (L) abgedreht wird, wodurch an der Abteilstelle eine Abdrehstelle einspringt, wobei der Abstand der Führungselemente (2a, b) zueinander in Abhängigkeit des Wurstkalibers eingestellt wird, wobei die Führungselemente (2a, b, c, d) und die Abteilelemente (3a, b) räumlich überlagert angeordnet sind, **dadurch gekennzeichnet, dass** die Bewegung der Abteilelemente (3a, b) unabhängig von den Führungselementen ist.

## Claims

1. Apparatus (1) for dividing stuffed sausage strands (12) without damaging the casing, comprising at least one pair of dividing elements (3a, b) for dividing the stuffed sausage strand (12) and comprising at least two guide elements (2a, b, c, d) between which the stuffed sausage strand (12) is conveyed in the conveying direction (T), so that the distance between the guide elements (2a, b, c, d) can be adjusted according to the sausage calibre (dk), wherein the guide elements (2a, b, c, d) and the dividing elements (3a, b) are arranged in a spatially overlapping manner,
**characterised in that**
the movement of the dividing elements (3a, b) is independent of the guide elements (2a, b, c, d).

2. Apparatus according to claim 1, **characterised in that** the distance between the guide elements (2a, b, c, d) is adjustable in such a way that it is larger than the sausage calibre (dk) and in particular the distance a between a sausage strand (12) arranged in the centre (M) of the guide elements and the guide elements (2a, b, c, d) is in a range of from 0.5 to 5 mm, preferably in a range of from 0.5 to 2 mm.

3. Apparatus according to at least one of claim 1 to 2, **characterised in that** the dividing point is established in a region between the guide elements (2a, b, c, d).

4. Apparatus according to at least one of claims 1 to 3, **characterised in that** the guide elements (2a, b, c, d) are arranged at the smallest possible distance from the ejection end of the stuffing tube (9) in such a way that the dividing elements are just prevented from coming into contact with the stuffing tube.

5. Apparatus according to at least one of claims 1 to 4, **characterised in that** the at least two guide elements comprise at least two opposed guide strips (2a, b, c, d) which extend in the conveying direction (T) and which can preferably be moved synchronously in the direction of the centre (M) of the guide elements.

6. Apparatus according to at least claim 5, **characterised in that** the apparatus (1) comprises at least two opposed rotating elements (7a, b) each comprising atleastone dividing element (3a, b), the guide strips (2a, b, c, d) being arranged in such a way that the dividing elements (3a, b) are movable in the conveying direction (T) between said guide strips (2a, b, c, d) in a contact-free manner.

7. Apparatus according to at least one of claims 1 to 4, **characterised in that** the guide elements (2a, b) are formed so as to travel in the conveying direction (T).

8. Apparatus according to claim 7, **characterised in that** the guide elements (2a, b) comprise cams (10a, b), in particular V- or U-shaped cams (10a, b) which are arranged on two opposed rotating parts (11a, b), in particular belts, bands or chains.

9. Apparatus according to either claim 7 or claim 8, **characterised in that** the dividing elements (3a, b) are arranged between the guide elements in the front end region, viewed in the conveying direction (T)₁ of said guide elements (2a, b).

10. Apparatus according to at least one of claims 7 to 9, **characterised in that** the cams (10a, b) are flexible at least in part.

11. Apparatus according to at least one of claims 7 to 10, **characterised in that** the cams are arranged offset from one another in the conveying direction (T) on the opposed rotating parts (11a, b).

12. Apparatus according to at least one of claims 7 to 11, **characterised in that** the path of movement of the guide elements (2a, b) and the path of movement of the dividing elements (3a, b) intersect.

13. Apparatus according to at least one of claims 7 to 12, **characterised in that** the opposed guide elements (2a, b), viewed in the conveying direction, are at a distance from one another in a front region, in such a way that the sausage strand can rotate freely between the guide elements, the distance behind decreasing in such a way that the sausages are clamped and conveyed in the conveying direction T.

14. Method of dividing stuffed sausage strands (12), which involves stuffing the sausage strand (12) via a stuffing tube (9), then dividing the strand via dividing elements (3a, b), at the same time guiding the strand by means of at least two guide elements (2a, b), and twisting the strand off by rotating the stuffing tube (9) about its longitudinal axis (L)₁ whereby a twist-off point is formed at the dividing point, the distance between the guide elements (2a, b) being adjusted according to the sausage calibre, wherein the guide elements (2a, b, c, d) and the dividing elements (3a, b) are arranged in a spatially overlapping manner,**characterised in that** the movement of the dividing elements (3a, b) is independent of the guide elements.

## Revendications

1. Dispositif (1) de séparation, préservant les enveloppes, de chapelets de saucisses (12) remplis, comprenant au moins une paire d'éléments de séparation (3a, b) pour partager le chapelet de saucisses rempli (12) et au moins deux éléments de guidage (2a, b, c, d), entre lesquels le chapelet de saucisses rempli (12) est transporté dans la direction de transport (T), de sorte que l'écartement mutuel des éléments de guidage (2a, b, c, d) est réglable en fonction du calibre (dk) des saucisses, et les éléments de guidage (2a, b, c, d) et les éléments de séparation (3a, b) sont superposés dans l'espace.
**caractérisé en ce que**
le déplacement des éléments de séparation (3a, b) est indépendant des éléments de guidage (2a, b, c, d).

2. Dispositif suivant la revendications 1, **caractérisé en ce que** l'écartement des éléments de guidage (2a, b, c, d) est réglable de telle sorte qu'il est plus grand que le calibre (dk) des saucisses et en particulier l'écartement (a) d'un chapelet de saucisses (12), disposé au centre (M) des éléments de guidage, par rapport aux éléments de guidage (2a, b, c, d) se situe dans une plage de 0,5 à 5 mm, de préférence dans une plage de 0,5 à 2 mm.

3. Dispositif suivant l'une au moins des revendications 1 à 2, **caractérisé en ce que** l'emplacement de séparation est produit dans une zone comprise entre les éléments de guidage (2a, b, c, d).

4. Dispositif suivant l'une au moins des revendications 1 à 3, **caractérisé en ce que** les éléments de guidage (2a, b, c, d) présentent une distance la plus faible possible par rapport à l'extrémité d'éjection du tube de remplissage (9), de telle sorte que les éléments de séparation n'entrent absolument pas au contact du tube de remplissage.

5. Dispositif suivant l'une au moins des revendications 1 à 4, **caractérisé en ce que** les au moins deux éléments de guidage comprennent au moins deux barres de guidage (2a, b, c, d) en vis-à-vis, s'étendant dans la direction de transport (T), lesquelles barres sont déplaçables de préférence en synchronisme en direction du centre (M) des éléments de guidage.

6. Dispositif suivant au moins la revendication 5, **caractérisé en ce que** le dispositif (1) comprend au moins deux éléments (7a, b) tournant en vis-à-vis, qui comprennent respectivement au moins un élément de séparation (3a, b), les barres de guidage (2a, b, c, d) étant disposées de telle sorte que les éléments de séparation (3a, b) sont mobiles sans contact entre les barres de guidage (2a, b, c, d) dans la direction de transport (T).

7. Dispositif suivant l'une au moins des revendications 1 à 4, **caractérisé en ce que** les éléments de guidage (2a, b) ont une réalisation rotative dans la direction de transport (T).

8. Dispositif suivant la revendication 7, **caractérisé en ce que** les éléments de guidage (2a, b) comprennent des cames (10a, b), en particulier des cames (10a, b) en V ou en U, qui sont disposées sur deux pièces (11a, b) tournant en vis-à-vis, en particulier des courroies, des bandes ou des chaînes.

9. Dispositif suivant l'une des revendications 7 et 8, **caractérisé en ce que** les éléments de séparation (3a, b) se situent dans la zone d'extrémité avant, vue dans la direction de transport (T), des éléments de guidage (2a, b) entre les éléments de guidages.

10. Dispositif suivant l'une au moins des revendications 7 à 9, **caractérisé en ce que** les cames (10a, b) ont une réalisation au moins en partie flexible.

11. Dispositif suivant l'une au moins des revendications 7 à 10, **caractérisé en ce que** les cames sont disposées en déport mutuel, dans la direction de transport (T), sur les pièces (11a, b) tournant en vis-à-vis.

12. Dispositif suivant l'une au moins des revendications 7 à 11, **caractérisé en ce que** la trajectoire de déplacement des éléments de guidage (2a, b) et la trajectoire de déplacement des éléments de séparation (3a, b) se coupent.

13. Dispositif suivant l'une au moins des revendications 7 - 12, **caractérisé en ce que** les éléments de guidage (2a, b) en vis-à-vis, vus dans la direction de transport, présentent dans la zone avant un écartement mutuel de telle sorte que le chapelet de saucisses peut tourner librement entre eux, l'écartement diminuant derrière de sorte que les saucisses sont coincées et transportées dans la direction de transport T.

14. Procédé de séparation de chapelets de saucisses (12) remplis, dans lequel le chapelet de saucisses (12) est rempli par l'intermédiaire d'un tube de remplissage (9), puis partagé par l'intermédiaire d'éléments de séparation (3a, b) et alors guidé par au moins deux éléments de guidage (2a, b) et séparé par torsion par rotation du tube de remplissage (9) autour de son axe longitudinal (L), un emplacement de séparation par torsion s'enclenchant de ce fait à l'emplacement de séparation, l'écartement mutuel des éléments de guidage (2a, b) étant réglé en fonction du calibre des saucisses, et les éléments de guidage (2a, b, c, d) et les éléments de séparation (3a, b) sont superposés dans l'espace, **caractérisé en ce que** le déplacement des éléments de séparation (3a, b) est indépendant des éléments de guidage.
